# EUROPÄISCHE PATENTSCHRIFT

(11) **EP 0 813 723 B1**
(45) Veröffentlichungstag und Bekanntmachung des Hinweises auf die Patenterteilung: **02.09.1998**
(21) Anmeldenummer: 96905687.8
(22) Anmeldetag: 06.03.1996
(51) Int. Cl.: G07F 7/10

(54) **CHIPKARTE MIT GESCHÜTZTEM BETRIEBSSYSTEM**
CHIP CARD WITH PROTECTED OPERATING SYSTEM
CARTE A PUCE AVEC SYSTEME D'EXPLOITATION PROTEGE

(30) Priorität: 10.03.1995 DE 19508724
(43) Veröffentlichungstag der Anmeldung: 29.12.1997
(73) Patentinhaber: SIEMENS AKTIENGESELLSCHAFT, 80333 München (DE)
(72) Erfinder: WEINLÄNDER, Markus, D-91230 Happurg (DE)
(86) Internationale Anmeldenummer: DE9600399
(87) Internationale Veröffentlichungsnummer: WO9628795

(56) Entgegenhaltungen:
- EP-A- 0 361 491
- EP-A- 0 540 095

## Beschreibung

Chipkarten finden in stark steigendem Maße in unterschiedlichsten Bereichen des täglichen Lebens Anwendung. Dementsprechend sind sehr große Mengen derselben im Umlauf. Üblicherweise sind eine Vielzahl von Maßnahmen vorgesehen, um nach der Ausgabe der Chipkarte, d.h. während der normalen Benutzung, Vermögensschäden insbesondere für den jeweiligen Kartenbesitzer zu vermeiden. So muß z.B. nach einem Kartenverlust zumindest eine unbefugte Benutzung der Karte durch beliebige Dritte verhindert werden.

Aufgrund der steigenden mengenmäßigen Verbreitung müssen aber auch Maßnahmen vorgesehen werden, um insbesondere größere Kartenmengen bereits vor deren einzelner Ausgabe an die Endkunden zu schützen. So werden Karten z.B. in u.U. sehr großen Mengen von einem Kartenhersteller an einen Verteiler von Karten, z.B. an ein Geldinstitut geschickt. Dieser Weg ist vergleichbar mit dem Transport von größeren Geldmengen zwischen Banken, und somit entsprechend gefährdet.

In der JP 62-221 089 wird eine Blockierung einer Chipkarte bei der Initialisierung aufgehoben, indem ein Datencode eingelesen und mit einem auf der Chipkarte gespeicherten, entsprechenden Datencode verglichen wird. Nur bei einer Übereinstimmung des auf der Chipkarte gespeicherten Codes mit dem vom Benutzer einzugebenden Code wird die Karte zur Initialisierung freigegeben. Es findet somit ein Vergleich statt. Der zum Vergleich herangezogene Datencode ist schon auf der Karte enthalten.

Bei der in der JP 61-235 994 vorliegenden Chipkarte werden von einem Benutzer bei einer Initialisierung benutzerspezifische Daten eingegeben. Die Chipkarte enthält zwei verschiedene Befehlssatze. Der erste Befehlssatz ermöglicht die Durchführung der Initialisierung. Nach erfolgreichem Abschluß der Initialisierung wird durch Setzen eines sogenannten "end flags" anstelle des ersten Befehlssatzes der zweite aktiviert.

Hierdurch wird die Chipkarte für den weiteren Gebrauch durch den Benutzer freigegeben.

Eine Chipkarte entsprechend dem Oberbegriff von Anspruch 1 ist der EP-A-540 095 entnehmbar.

Der Erfindung liegt die Aufgabe zugrunde einen Schutz für eine Chipkarte anzugeben, der bereits in der Zwischenphase zwischen deren Herstellung und deren Übergabe in den normalen Gebrauch wirksam ist. Es soll somit insbesondere ausgeschlossen sein, daß z.B. in den bei der Herstellung auf die Chipkarte aufgebrachten Programmcode selbst, insbesondere in den Code des Betriebssystems, Einsicht genommen bzw. dieser unbefugt oder unprofessionell verändert werden kann.

Die Aufgabe wird gelöst mit der im Anspruch 1 angegebenen Chipkarte. Dabei sind der interne Prozessor und ein zur Aufnahme eines Betriebssystems zum Betrieb des Prozessors und hierüber wiederum gegebenenfalls weiterer Funktionselemente der Chipkarte, wie z.B. Energieversorgung, Datenschnittstelle zum Austausch von Daten zwischen der Chipkarte und externen Schreib- und Lesestationen u.dgl., dienender nichtflüchtigter Programmspeicher so aufeinander abgestimmt, daß die Chipkarte nach ihrer Herstellung nur eine Befehlsanweisung ausführen kann, wenn sie erstmalig mit einer Schreib-Lesestation in datentechnische Verbindung gebracht wird. Diese Befehlsanweisung bewirkt das Nachladen einer betriebssystemspezifischen Kommandotabelle in den nichtflüchtigen Speicher des Prozessors. Erst nach erfolgreicher Beendigung dieser Ladeoperation ist eine Zuordnung von weiteren, insbesondere über externe Schreib-Lesestationen der Chipkarte zugeführten Anwenderbefehlsanweisungen zu den für deren Ausführung vorgesehenen, jeweiligen Betriebssystemteilen möglich. Die Ausführung der für eine ordnungsgemäße Funktionsfähigkeit der Chipkarte gehörigen Befehlsanweisungen in Bezug auf alle während der Normalnutzung maximal möglichen Operationen ist somit erst nach Einbindung der Kommandotabelle möglich.

Diese Ausführung bietet den Vorteil, daß u.U. auch sehr große Mengen frisch hergestellter Chipkarten nahezu vollkommen unbrauchbar sind. Die Ermöglichung der Gebrauchsfertigkeit erfolgt vielmehr separat für jede einzelne Chipkarte meist erst unmittelbar vor deren Übergabe an den berechtigten Endbenutzer. Neu hergestellte Chipkarten, in deren nichtflüchtigem Speicher bzw. anderen Speicherbereichen zwar die Codierung der aufeinanderfolgenden Betriebssystembefehlsanweisungen geladen ist, sind deswegen nicht funktionsfähig, weil aufgrund der fehlenden Kommandotabelle eingehende Anwenderbefehlsanweisungen nicht identifiziert und der bzw. die zu deren Ausführung benötigten Betriebssystemteile wegen der nicht vorhandenen, dazugehörigen Verzweigadressen nicht aktiviert werden können. Praktisch ist es mit vernünftigem Zeit- und Mittelaufwand nahezu nicht möglich, in der Art eines Reverse-Engineering die funktionelle Struktur des Betriebssystems so zu rekonstruieren, daß die zur Ausführung einzelner Anwenderbefehlsanweisung gehörigen Teile und deren mögliche Wechselwirkungen in Form von Einsprungadressen zugänglich werden.

Die Gestaltung einer Chipkarte gemäß der Erfindung bietet den Vorteil, daß die Chipkarte vor deren Autorisierung durch Nachladen der Kommandotabelle meist unmittelbar vor Übergabe in den Herrschaftsbereich des neuen Besitzers nahezu gegen jede Art von unbefugtem Gebrauch geschützt ist, ohne daß aufwendige Maßnahmen im Hard- oder Softwarebereich der Chipkarte vorgesehen werden müßten, welche die Herstellung der Chipkarte verteuern und deren Gebrauchs fähigkeit möglicherweise einschränken würden. Einerseits ist auf einfache Weise möglich, die Chipkarte zur alleinigen Ausführbarkeit des Ladebefehls für die Kommandotabelle zu ertüchtigen. Andererseits bereitet das Nachladen der Kommandotabelle datentechnisch für eine befugterweise im Besitz des Codes der Kommandotabelle befindliche Einrichtung, wie z.B. eine Bank, keinerlei Probleme. Bei diesem Vorgang können bei Bedarf gleichzeitig auch beliebige weitere, die jeweilige Chipkarte z.B. bezüglich des neuen Benutzers individualisierende Daten übertragen werden.

Neben der Verhinderung unbefugter Benutzung von Chipkarten vor deren Übergabe in den normalen Gebrauch wird durch die Erfindung auch unterbunden, daß in dieser Zwischenphase in den bei der Herstellung auf die Chipkarte aufgebrachten Programmcode selbst, insbesondere der Code des Betriebssystems, in unbefugter Weise Einsicht genommen bzw. dieser unbefugt oder unprofessionell verändert wird.

Gemäß einer vorteilhaften weiteren Ausgestaltung der Erfindung können zusätzlich Mittel vorhanden sein, eine Übertragung der Kommandotabelle in kryptologisch verschlüsselter Form bewirken. Beim Ladevorgang können dann die Sequenzen der übertragenen Codeanweisungen der Kommandotabelle zwar abgehört werden. Dennoch gelangt hierdurch die Kommandotabelle nicht im Klartext in die Hände möglicherweise unbefugter Personen. Vorteilhaft wird die krypotologische Verschlüsselung mittels eine sogenannten Prüfsumme geschützt.

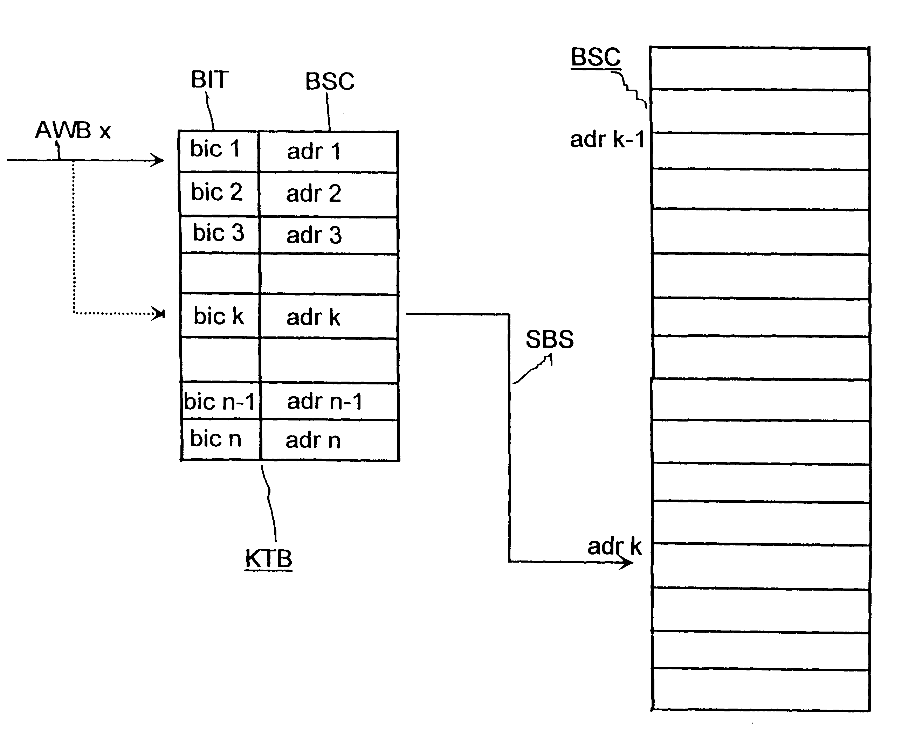

Die Erfindung wird nachfolgend an dem in der Figur dargestellten Ausführungsbeispiel näher erläutert.

Auf der rechten Seite der Figur ist beispielhaft in anschaulicher Tabellenform ein Ausschnitt aus der Sequenz der aufeinanderfolgenden Anweisungen des Betriebssystemcodes BSC dargestellt. Dabei ist gedanklich die Tabelle sowohl nach oben als auch nach unter fortzusetzen. Der Ausschnitt zeigt beispielhaft eine vorangehende Einsprungadresse adr k-1 und eine darauf folgende Einsprungadresse adr k. Die einer dieser Einsprungsadressen zugeordnete Zeile des Betriebssystembefehlscodes und die bis zur nächsten Einsprungadresse darauf folgenden Zeilen des Betriebssystembefehlscodes bilden eine Gruppe, welche die Ausführung eines bestimmten Anwenderkommandos bewirkt.

Im Beispiel der Figur wird der Chipkarte ein aktuelles Anwenderkommando AWB x bevorzugt von einer externen Schreib-Lesestation zugeführt. Dieses soll vom Betriebssystem ausgeführt werden. Hierzu wird eine Kommandotabelle KTB benötigt, welche quasi einen den Zugang zu den funktionellen Teileinheiten des Betriebssystems BSC ermöglichenden Schlüssel darstellt. Beispielhaft besteht jede Zeile der Kommandotabelle KTB aus einem ersten Codeteil bic k, welcher zur Interpretation, d.h. zur Erkennung des Typs, des aktuellen Anwenderkommandos AWB x dient, und aus einem zweiten Codeteil adr k, welcher die Startadresse der dazugehörigen Betriebssystembefehlssequenz enthält. Die Kommandotabelle KTB besteht somit aus einer ersten Teiltabelle BIT, welche die zur Befehlsinterpretation dienenden Codes bic 1, bic 2, bic 3 ... bic k ... bic n-1, bic n enthält, und aus einer zweiten Teiltabelle BSC, welche die dazugehörigen Einsprungsadressen adr 1, adr 2, adr 3 ... adr k ... adr n-1, adr n der entsprechenden Betriebssystemsequenzen enthält.

Bei dem in der Figur dargestellten Beispiel wird ein mit AWB x bezeichnetes Anwenderkommando der Chipkarte zugeführt. Dieses wird durch die Codierung bic k als zulässiger Befehl erkannt, was in der Figur durch eine strichlierte Linie auf der linken Seite der Kommandotabelle KTB dargestellt ist. Nun wird die dazugehörige Einsprungadresse adr k aktiviert und hierdurch der Code des Betriebssystems BSC von Beginn bei der Einsprungadresse adr k an ausgeführt. In der Figur ist der Aufruf der zum Anwenderkommando AWB x gehörenden Betriebssystemsequenz durch einen von der entsprechenden Zelle der Kommandotabelle KTB bis zur Einsprungadresse adr k verlaufenden Pfeil SBS dargestellt.

Aus dem Beispiel der Figur ist zu erkennen, daß ohne die Brückenfunktion einer Kommandotabelle KTB kein Anwenderkommando AWB x ausführbar ist, da keine Zuordnung desselben zu dem dazugehörigen Teil des Betriebssystems möglich ist. Die erfindungsgemäße Ausgestaltung der Chipkarte stellt somit einen außerordentlich wirksamen Schutz gegen unbefugte Benutzung frisch hergestellter Chipkarten dar.

## Patentansprüche

1. Chipkarte, mit zumindest einem internen Prozessor und einem nichtflüchtigen Programmspeicher für ein Betriebssystem (BSC) des Prozessors, dadurch gekennzeichnet, daß die Chipkarte nach deren Herstellung und einer ersten datentechnischen Verbindung mit einer Schreib-Lesestation nur die mindestens eine Befehlsanweisung ausführen kann, welche das Nachladen einer betriebssystemspezifischen Kommandotabelle (KTB) in den nichtflüchtigen Programmspeicher des Prozessors bewirkt, womit die Zuordnung ( adr1 ... adr k ... adr n ) von Anwenderbefehlsanweisungen (AWBx) zu den diese jeweils ausführenden Teilen des Betriebssystems (BSC) hergestellt wird.

2. Chipkarte nach Anspruch 1, wobei Mittel vorhanden sind, welche eine Übertragung der Kommandotabelle (KTB) in kryptologisch verschlüsselter Form bewirken.

3. Chipkarte nach Anspruch 2, wobei die kryptologische Verschlüsselung mittels einer Prüfsumme bewirkt wird.

## Claims

1. Chip card, having at least one internal processor and one non-volatile program memory for an operating system (BSC) of the processor, characterized in that, after its manufacture and a first data-handling connection to a read-write station, the chip card can execute only the at least one command instruction which effects the reloading of a command table (KTB) specific to the operating system into the non-volatile program memory of the processor, whereby the assignment (adr1 ... adr k ... adr n) of user command instructions (AWBx) to the parts of the operating system (BSC) respectively executing them is established.

2. Chip card according to Claim 1, there being means which effect a transfer of the command table-(KTB) in a cryptologically encoded form.

3. Chip card according to Claim 2, the cryptological encoding being effected by means of a check sum.

## Revendications

1. Carte à puce, comportant au moins un processeur interne et une mémoire de programme non volatile destinée à un système d'exploitation (BSC) du processeur, caractérisée par le fait que la carte à puce après sa fabrication et après une première liaison informatique avec un poste d'écriture et de lecture ne peut exécuter que la au moins une instruction de commande qui provoque le chargement d'une table de commande (KTB) spécifique au système d'exploitation dans la mémoire de programme non volatile du processeur, créant ainsi l'association (adr 1,..., adr k,..., adr n) d'instructions de commandes d'utilisateur (AWB x) à des parties du système d'exploitation (BSC) qui exécutent respectivement ces instructions.

2. Carte à puce selon la revendication 1, dans laquelle il existe des moyens qui mettent en oeuvre une transmission de la table de commandes (KTB) sous une forme codée cryptée.

3. Carte à puce selon la revendication 2, dans laquelle le codage crypté est mis en oeuvre au moyen d'une somme de contrôle.
